# FASCICULE DE BREVET EUROPEEN

(11) **EP 4 641 763 B1**
(45) Date de publication et mention de la délivrance du brevet: **09.12.2026**
(21) Numéro de dépôt: 24305619.9
(22) Date de dépôt: 22.04.2024
(51) Int. Cl.: H01M 10/613, H01M 10/6556, H01M 10/6567, H01M 10/6568, H01M 50/204, H01M 50/291

(54) **BATTERIE POUR VÉHICULE ÉLECTRIQUE OU HYBRIDE, COMPRENANT DES TRAVERSES ET DES CONNECTEURS FORMANT UN PARCOURS POUR UN FLUIDE RÉFRIGÉRANT**
BATTERIE FÜR EIN ELEKTRISCHES ODER HYBRIDFAHRZEUG MIT QUERTRÄGERN UND VERBINDERN ZUR BILDUNG EINER BAHN FÜR EIN KÜHLMITTEL
BATTERY FOR AN ELECTRIC OR HYBRID VEHICLE, COMPRISING CROSS-MEMBERS AND CONNECTORS FORMING A PATH FOR A REFRIGERANT FLUID

(43) Date de publication de la demande: 29.10.2025
(73) Titulaire: Automotive Cells Company SE, 33520 Bruges (FR)
(72) Inventeur: BAYLAC, Johan, 33800 BORDEAUX (FR); CHAUVEAU, Pierre, 33520 BRUGES (FR); FAT-CHEUNG, Adrien, 33520 BRUGES (FR)
(74) Mandataire: Lavoix

(56) Documents cités:
- EP-A1- 3 273 500
- EP-A1- 3 570 364
- EP-A1- 3 759 761
- EP-A1- 4 170 788
- EP-A2- 4 315 485

## Description

La présente invention concerne une batterie électrique, notamment pour véhicule électrique ou hybride.

On entend par « batterie » une pluralité de cellules électrochimiques reliées électriquement les unes aux autres. Selon un exemple particulier de batterie, la pluralité de cellules électrochimiques est agencée sous la forme d'un ou plusieurs module(s), chaque module comprenant plusieurs cellules électrochimiques raccordées électriquement les unes aux autres et assemblées mécaniquement les unes aux autres par un système d'assemblage, tel que des plaques d'assemblage. Une cellule électrochimique comprend, en particulier, un empilement d'électrodes positives, d'électrodes négatives et de séparateurs, connu sous le terme anglais de « stack ». Les électrodes positives reliées les unes aux autres forment une borne positive de la batterie, et les électrodes négatives reliées les unes aux autres forment une borne négative.

La batterie comporte en général un boîtier participant à la protection de ses éléments internes, en particulier les cellules électrochimiques et les connecteurs électriques. La batterie peut en outre comporter des structures internes pour renforcer sa rigidité, et augmenter sa résistance mécanique, notamment vis-à-vis d'un choc sur le véhicule.

Par ailleurs, en fonctionnement, les cellules électrochimiques sont susceptibles de produire de la chaleur. Afin d'éviter une élévation trop importante de la température à l'intérieur de la batterie, qui pourrait endommager certains éléments internes ou nuire à leur fonctionnement, au moins une partie de cette chaleur est évacuée à l'extérieur de la batterie.

Par exemple, il est connu d'utiliser une plaque de refroidissement, en général située au-dessus ou en-dessous des modules, en contact thermique avec au moins certains d'entre eux. La chaleur dégagée par les cellules électrochimiques se communique à la plaque de refroidissement, qui comporte des ailettes pour dissiper la chaleur dans l'atmosphère, ou est parcourue par un fluide réfrigérant.

Toutefois, un tel système d'évacuation de la chaleur a une efficacité donnée, qui peut s'avérer trop limitée dans certains cas, ce qui augmente le risque de dysfonctionnement de la batterie.

Le document EP 3 570 364 A décrit une batterie pour véhicule électrique comportant un boîtier et des poutres formant des traverses. Des conduits de liquide de refroidissement sont fixés sur ces poutres.

Les documents EP 4 315 485 A, EP 4 170 788 A et EP 3 273 500 A décrivent des batteries analogues.

Un but de l'invention est donc de fournir une batterie présentant un risque de dysfonctionnement thermique qui soit réduit.

A cet effet, l'invention a pour objet une batterie selon la revendication 1.

Des modes avantageux de réalisation de la batterie sont définies dans les revendications dépendantes.

L'invention sera mieux comprise à la lecture de la description qui va suivre, donnée uniquement à titre d'exemple et faite en se référant aux dessins annexés, sur lesquels :
- la figure 1 est une vue schématique, en perspective, d'une batterie selon l'invention,
- la figure 2 est une vue schématique, de dessus, de la batterie représentée sur la figure 1, montrant le parcours du fluide réfrigérant,
- la figure 3 est une vue schématique, en perspective, éclatée selon la direction longitudinale de la batterie, d'une des traverses de la batterie représentée sur les figures 1 et 2, cette traverse permettant une double circulation (dans les deux sens) du fluide réfrigérant,
- la figure 4 est une vue schématique, en perspective et en coupe selon un plan horizontal, de la traverse représentée sur la figure 3,
- la figure 5 est une vue schématique, en perspective, d'une des plaques latérales de la traverse représentée sur la figure 3,
- la figure 6 est une vue schématique, en perspective, éclatée dans la direction longitudinale de la batterie, d'une autre des traverses de la batterie représentée sur les figures 1 et 2, cette traverse permettant une simple circulation (dans un seul sens) du fluide réfrigérant,
- la figure 7 est une vue schématique, en perspective, d'une extrémité transversale d'une des deux plaques latérales de la traverse représentée sur la figure 6, et
- la figure 8 est une vue schématique, en coupe selon un plan perpendiculaire à la direction transversale, de la traverse représentée sur la figure 6.

### Batterie

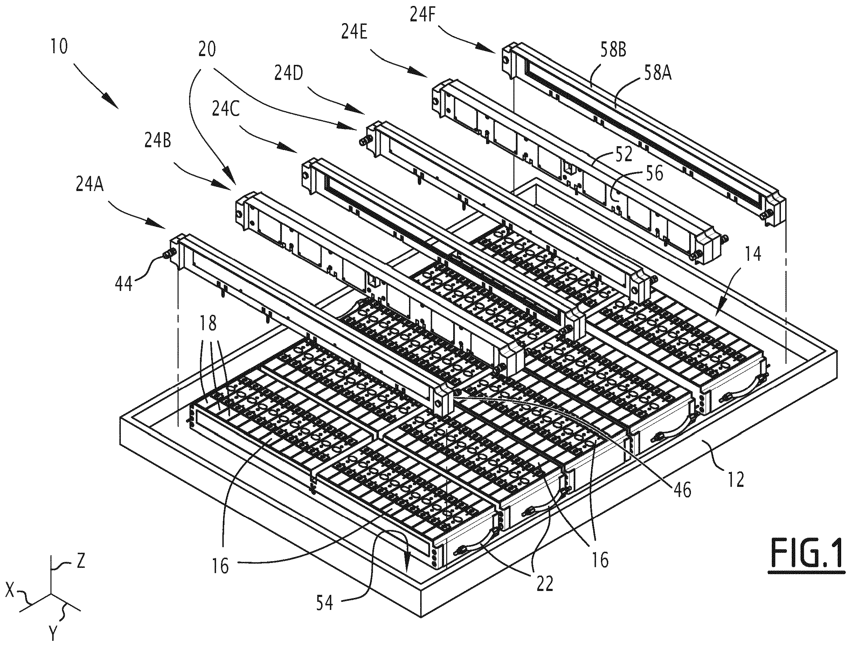

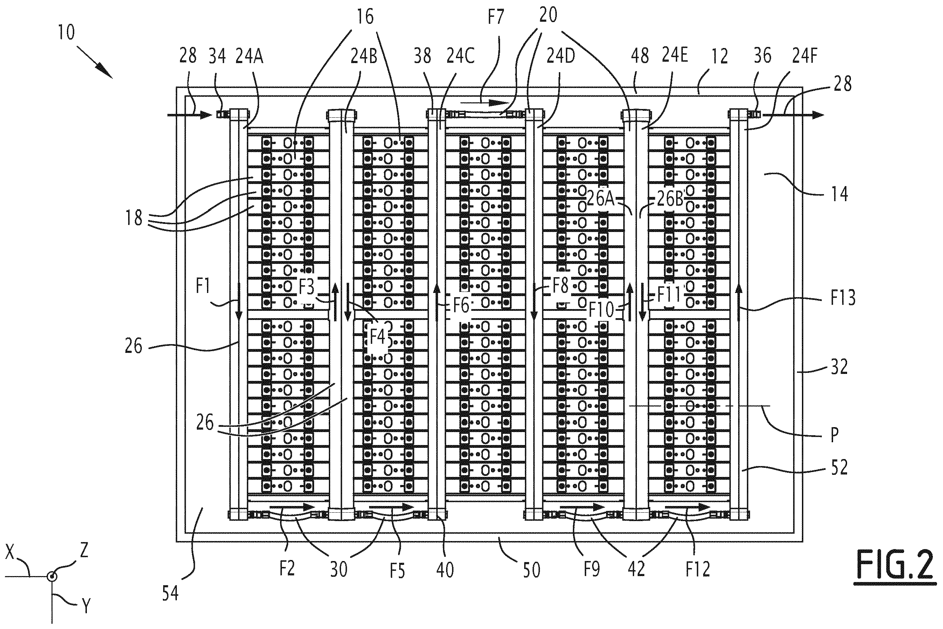

En référence aux figures 1 et 2, on décrit une batterie 10 selon l'invention, pour un véhicule électrique ou hybride (non représenté).

La batterie 10 comprend un boîtier 12 définissant un logement 14 s'étendant dans une direction longitudinale X et dans une direction transversale Y perpendiculaire à la direction longitudinale X, et qui sont par exemple les directions longitudinale et transversale du véhicule.

On définit également une direction Z perpendiculaire à la direction longitudinale X et à la direction transversale Y, et qui est par exemple verticale lorsque le véhicule se trouve sur une surface horizontale (non représentée).

La batterie 10 comprend une pluralité de modules 16 comportant plusieurs cellules électrochimiques 18 susceptibles en fonctionnement de dégager de la chaleur, et un système 20 de refroidissement et de renfort de la batterie 10.

La batterie 10 comprend avantageusement des connecteurs électriques (non représentés) adaptés pour connecter les cellules électrochimiques 18 entre elles et les modules 16 entre eux.

Le boîtier 12 est par exemple de forme parallélépipédique, et rectangle ou carré en vue selon la direction Z.

Dans l'exemple, dans chacun des modules 16, les cellules électrochimiques 18 sont successives dans la direction transversale Y.

En variante non représenté, les cellules électrochimiques 18 sont successives dans la direction longitudinale X.

### Système de refroidissement et de renfort de la batterie

Le système 20 comprend une pluralité de traverses 24A, ...24F s'étendant transversalement dans le logement 14, les traverses définissant respectivement dans la direction transversale Y des conduits internes 26 transversaux destinés à recevoir un fluide réfrigérant 28. Le système 20 comprend une pluralité de connecteurs 30 adaptés pour relier fluidiquement le conduit interne 26 d'une des traverses 24A, ...24F au conduit interne d'une autre des traverses.

Le fluide réfrigérant 28 est avantageusement fourni par le véhicule, par exemple par un système de climatisation, ou un système de refroidissement du moteur (non représentés). Par exemple, le fluide réfrigérant 28 est de l'eau glycolée, de l'eau déminéralisée, une huile, par exemple diélectrique (à base d'hydrocarbures, de polyalphaoléfine ou PAO, ou de silicone), un fluorocarbure, ou tout autre liquide ne présentant pas de risque de corrosion des éléments avec lesquels il est en contact.

Dans l'exemple, chacun des modules 16 s'étend longitudinalement entre deux des traverses 24A, ...24F et est en contact thermique avec lesdites deux traverses.

Selon des variantes non représentées, certains des modules 16, par exemple ceux en position extrême dans la direction longitudinale X, ne sont en contact thermique qu'avec une seule des traverses 24A, ...24F.

Selon un autre mode de réalisation (non représenté), chacune des traverses 24A, ...24F est en contact thermique avec deux des modules 16, et chacun des modules 16 est en contact avec une seule des traverses 24A, ...24F.

Selon un mode de réalisation non recommandé, certain des modules 16 ne sont en contact thermique avec aucune des traverses 24A, ...24F, mais avec autre système d'évacuation de la chaleur, par exemple un bord 32 du boîtier 12 ou une plaque de refroidissement (non représentée).

Le point commun des modes de réalisation évoqués ci-dessus est que la batterie 10 possède une pluralité de modules 16, et chaque module de cette pluralité est en contact thermique, et par exemple mécanique, avec au moins une des traverses 24A, ...24F.

Dans l'exemple représenté, il y a deux modules 16 entre deux traverses consécutives dans la direction longitudinale X, et ces deux modules se suivent dans la direction transversale Y.

Selon des variantes non représentées, il pourrait y avoir un seul module 16, ou plus de deux modules 16 entre deux traverses consécutives.

Les connecteurs 30 et les traverses 24A, ...24F forment, dans l'exemple, un seul parcours (flèches F1 à F13 sur la figure 2) adapté pour permettre au fluide réfrigérant 28 de passer dans les conduits internes 26, la chaleur dégagée par les cellules électrochimiques 18 étant destinée à passer dans les traverses 24A, ...24F par transfert thermique, puis dans le fluide réfrigérant 28 pour être évacuée. Le parcours F1 à F13 passe dans les traverses 24A, ...24F successivement dans la direction longitudinale X. Le parcours F1 à F13 comprend une entrée 34 et une sortie 36 pour le fluide réfrigérant 28.

Selon des variantes non représentées, les connecteurs 30 et les traverses 24A, ...24F forment plusieurs parcours distincts, chaque parcours ayant au moins une entrée et au moins une sortie pour le fluide réfrigérant.

Selon d'autres variantes encore, le ou les parcours passe(nt) dans les traverses 24A, ...24F dans un ordre différent que celui de la succession des traverses dans la direction longitudinale X.

Dans l'exemple, les connecteurs 30 sont situés transversalement de part et d'autre des modules 16, chacun des conduits internes 26 reliant fluidiquement entre elles deux extrémités 38, 40 d'une des traverses 24A, ...24F, les deux extrémités étant opposées transversalement l'une à l'autre.

En variante (non représentée), les connecteurs 30 sont tous situés transversalement d'un même côté des modules 16. Cela requiert toutefois qu'au moins une des traverses soit à double circulation, comme cela sera expliqué plus bas.

Les connecteurs 30 comprennent avantageusement des tuyaux souples 42 adaptés pour être facilement et rapidement connectés aux extrémités 38, 40 des traverses 24A, ...24F, grâce à des embouts 42, 46 par exemple vissés dans chacune des traverses 24A, ...24F.

Les traverses 24A, ...24F s'étendent par exemple entre deux bords 48, 50 du boîtier 12 transversalement opposés l'un à l'autre et sont avantageusement adaptées pour renforcer structurellement la batterie 10.

Avantageusement, chacune des traverses 24A, ...24F a, en section selon un plan P perpendiculaire à la direction transversale Y, une forme en « T » (ou en variante non représentée, définissant un « T »). La barre du « T » définit une première partie 52 de chacune des traverses 24A, ...24F parallèle à un fond 54 du boîtier 12 et adaptée pour retenir les modules 16 vers fond 54 dans la direction Z. Le reste du « T » définit une deuxième partie 56 de chacune des traverses 24A, ...24F dans laquelle s'étend un des conduits internes 26.

Dans l'exemple, les traverses 24A, 24C, 24D, 24F sont à simple circulation : le conduit interne 26 de ces traverses est adapté pour permettre au fluide réfrigérant 28 d'entrer par l'une des deux extrémités 38, 40 et de sortir par l'autre des deux extrémités. Les traverses 24B, 24E sont à double circulation : le conduit interne 26 de ces traverses est adapté pour permettre au fluide réfrigérant 28 d'entrer par l'une des deux extrémités 38, 40, d'aller jusqu'à l'autre des deux extrémités 38, 40 via une première portion 26A du conduit interne, de revenir vers ladite une des deux extrémités via une deuxième portion 26B du conduit interne, et de sortir par ladite une des deux extrémités 38, 40.

Selon d'autres modes de réalisation (non représentés), d'autres combinaisons entre ces deux types de traverses (à simple ou double circulation) sont possibles.

Selon deux modes de réalisation particuliers (non représentés), toutes les traverses 24A, ...24F sont à simple circulation, ou toutes à double circulation.

### Traverses à double circulation

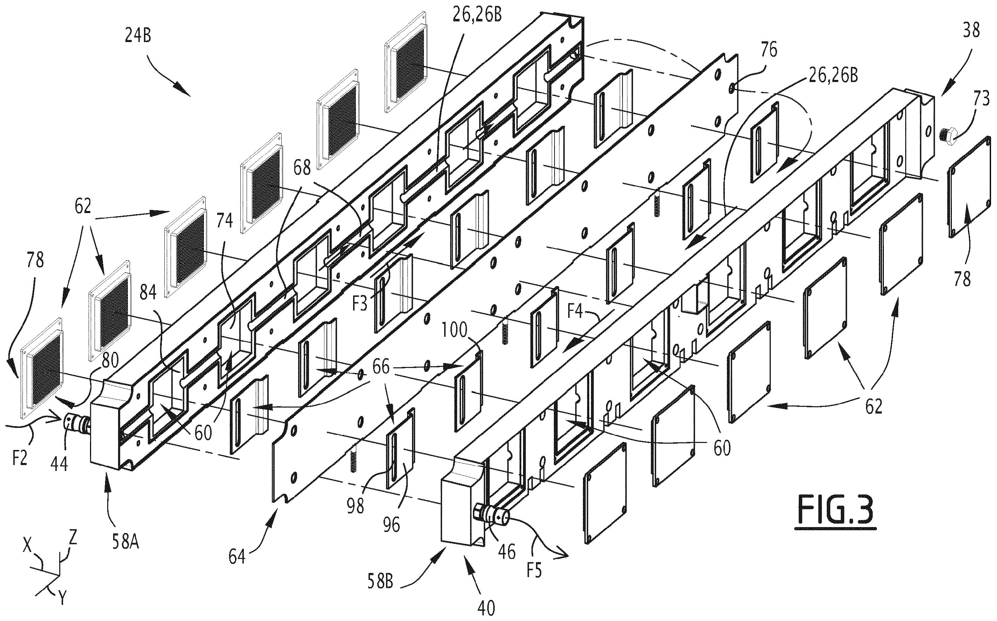

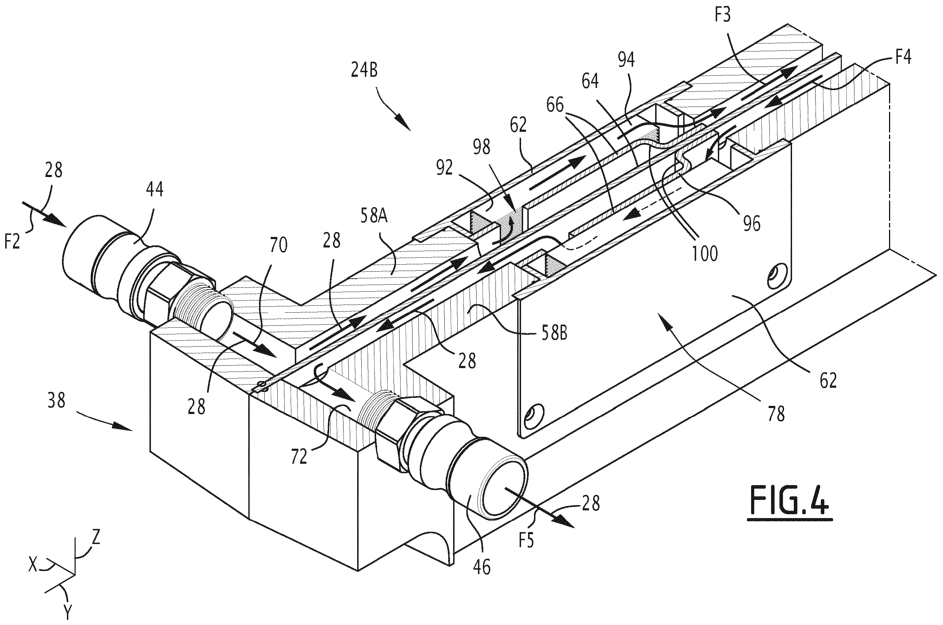

Avantageusement, les traverses 24B, 24E (à double circulation) sont structurellement identiques entre elles. Aussi, seule la traverse 24B sera décrite ci-après en référence aux figures 3 à 5.

La traverse 24B comprend deux demi-coques 58A, 58B s'étendant transversalement et se faisant face dans la direction longitudinale, chacune des deux demi-coques définissant une pluralité d'ouvertures 60. La traverse 24B comprend des plaques latérales 62 obstruant respectivement les ouvertures 60 de chacune des deux demi-coques 58A, 58B, et une plaque centrale 64 perpendiculaire à la direction longitudinale X.

Avantageusement, la traverse 24B comprend une pluralité d'éléments distributeurs 66 intercalés longitudinalement entre chacune des plaques latérales 62 et la plaque centrale 64.

Les deux demi-coques 58A, 58AB et les plaques latérales 62 définissent partiellement le conduit interne 26.

Les deux demi-coques 58A, 58B sont fixées sur la plaque centrale 64, le conduit interne 26 comprenant une première portion 26A située contre un côté de la plaque centrale dans la direction longitudinale X, et une deuxième portion 26B située de l'autre côté de la plaque centrale. Le fluide réfrigérant 28 est destiné à circuler dans la première portion 26A dans un sens (flèche F3) selon la direction transversale Y et à circuler dans la deuxième portion 26B dans l'autre sens (flèche F4).

Des joints d'étanchéité (non représentés) sont éventuellement présents pour assurer une étanchéité entre les plaques latérales 62 et les deux demi-coques 58A, 58B, et entre les deux demi-coques et la plaque centrale 64.

Avantageusement, les deux demi-coques 58A, 58B sont structurellement identiques l'une à l'autre. Par exemple, les deux demi-coques 58A, 58B sont obtenues par emboutissage d'une plaque de métal. Les deux demi-coques 58A, 58B sont par exemple en acier.

Dans chacune des deux demi-coques 58A, 58B, les ouvertures 60 sont espacées dans la direction transversale Y et par exemple structurellement identiques les unes aux autres. Les ouvertures 60 sont par exemple rectangulaires ou carrées en vue selon la direction longitudinale X.

Les ouvertures 60 sont par exemple reliées entre elles par des rainures 68, par exemple transversales, formées par les deux demi-coques 58A, 58B.

Dans une des extrémités 38, 40 de la traverse 24B, l'une des deux demi-coques 58A, 58B définit un conduit d'entrée 70, et l'autre des demi-coques définit un conduit de sortie 72, ces deux conduits étant par exemple orientés longitudinalement.

Des bouchons 73, avantageusement vissés dans les deux demi-coques 58A, 58B, ferment les conduits situés à l'autre extrémité de la traverse 24B.

Les ouvertures 60 forment par exemple des logements 74 dans lesquels les plaques latérales 62 sont reçues longitudinalement.

La plaque centrale 64 définit au moins un passage 76 (figure 3) pour permettre au fluide réfrigérant 28 de passer de la première portion 26A à la deuxième portion 26B du conduit interne 26. La plaque centrale 64 est par exemple en acier.

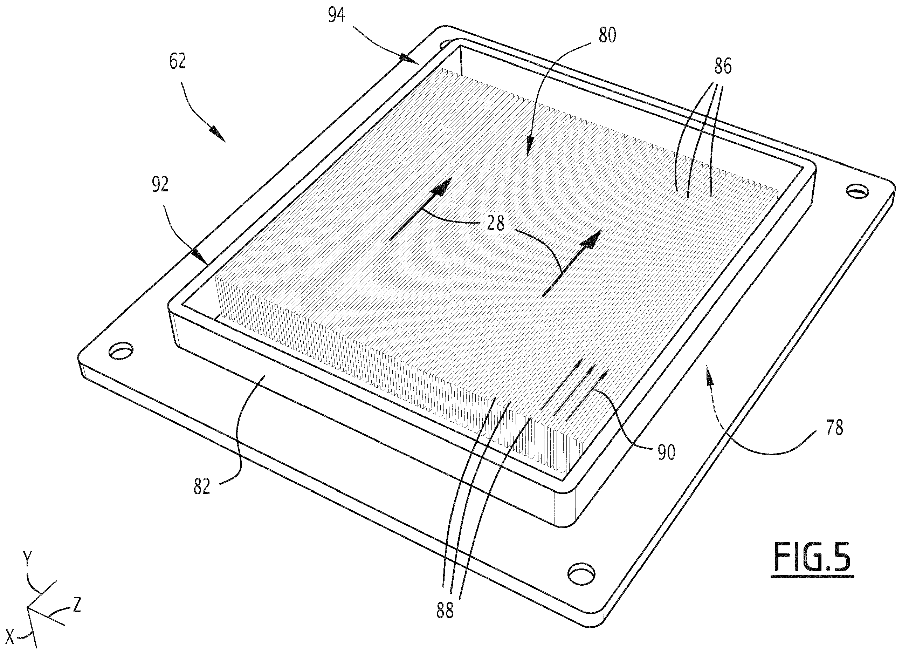

Comme visible sur la figure 5, chacune des plaques latérales 62 comprend une face externe 78, avantageusement plane, destinée à être en contact thermique avec l'un des modules 16. Chacune des plaques latérales 62 possède une face interne 80 opposée à la face externe 78 dans la direction longitudinale X. Avantageusement, chacune des plaques latérales 62 comprend aussi un bord 82 adapté pour coopérer avec un bord complémentaire 84 délimitant l'une des ouvertures 60.

Les plaques latérales 62 sont par exemple en aluminium ou en cuivre.

La face externe 78 de chacune des plaques latérales 62 est avantageusement en vis-à-vis d'une ou plusieurs cellules électrochimiques 18 d'un des modules 16.

La face interne 78 délimite en partie le conduit interne 26, et définit, selon l'invention, des protubérances 86 destinées à favoriser un échange thermique entre le fluide réfrigérant 28 et la plaque latérale 62 considérée.

Par exemple, les protubérances 86 forment des ailettes 88 définissant des passages 90 orientés transversalement pour le fluide réfrigérant 28.

Les ailettes 88 sont par exemple perpendiculaires à la direction Z.

Les éléments distributeurs 66 sont adaptés pour forcer le fluide réfrigérant 28 arrivant transversalement en amont d'une des plaques latérales 62 à entrer dans les passages 90 par un premier côté 92 des ailettes 88 dans la direction transversale Y, à parcourir les passages 90, puis à sortir des passages par un deuxième côté 94 des ailettes transversalement opposé au premier côté.

Par exemple, chacun des éléments distributeurs 66 est formé par une tôle 96.

La tôle 96 définit une ouverture allongée 98 dans la direction Z, plaquée contre le premier côté 92 ou le deuxième côté 94 des ailettes 88, et destinée à servir d'entrée ou, respectivement, de sortie pour le fluide réfrigérant 28. La tôle 96 comprend un épaulement 100 situé transversalement du deuxième côté 94 ou du premier côté 92 des ailettes 88 pour former un collecteur de sortie ou, respectivement, d'entrée pour le fluide réfrigérant 28.

### Traverses à simple circulation

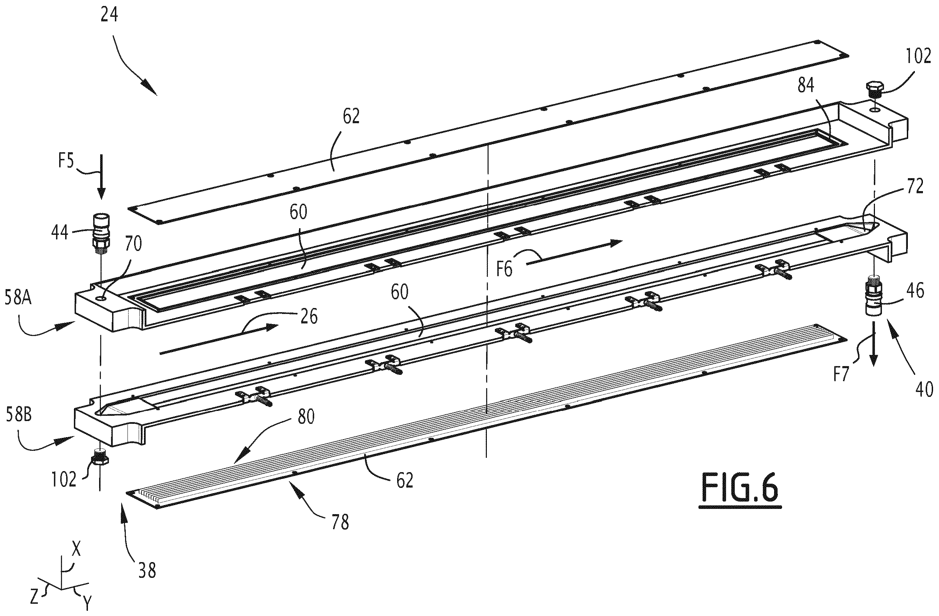

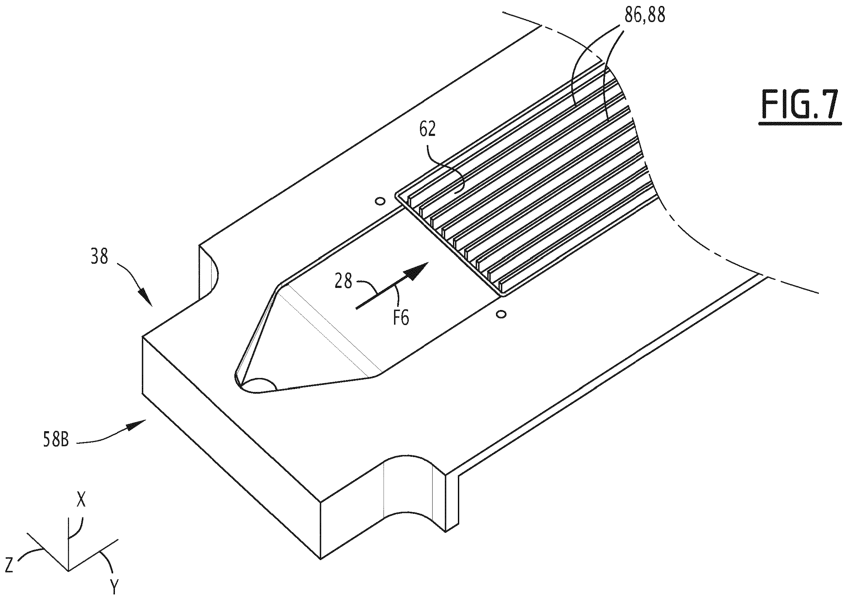

Avantageusement, les traverses 24A, 24C, 24D, 24F sont structurellement identiques entre elles. Aussi, seule la traverse 24C sera décrite ci-après en référence aux figures 6 à 8.

La traverse 24D (à simple circulation) est analogue à la traverse 24B (à double circulation) représentée sur les figures 3 à 5. Les éléments similaires portent les mêmes références numériques et ne seront pas décrits à nouveau. Seules les différences seront décrites en détail ci-après.

Chacune des deux demi-coques 58A, 58B définit une seule ouverture 60. La traverse 24D comprend deux plaques latérales 62 obstruant respectivement l'ouverture 60 de chacune des deux demi-coques 58A, 58B, et ne comprend pas de plaque centrale.

La traverse 24D ne comprend pas d'éléments distributeurs.

Les deux demi-coques 58A, 58B sont fixées l'une sur l'autre, le fluide réfrigérant 28 étant destiné à circuler dans le conduit interne 28 dans un seul sens (F6) selon la direction transversale Y.

Les deux demi-coques 58A, 58B et les deux plaques latérales 62 définissent totalement le conduit interne 26 (pas de plaque centrale).

Des joints d'étanchéité (non représentés) sont éventuellement présents pour assurer une étanchéité entre les deux plaques latérales 62 et les deux demi-coques 58A, 58B, et entre les deux demi-coques entre elles.

Les ouvertures 60 sont oblongues, par exemple rectangulaires en vue selon la direction longitudinale X. Par exemple, les ouvertures 60 s'étendent transversalement sur au moins 80% de la longueur de la traverse. Les ouvertures 60 sont par exemple en vis-à-vis l'une de l'autre dans la direction longitudinale X.

Dans l'une des extrémités 38, 40 de la traverse 24D, l'une des demi-coque 58A, 58B définit le conduit d'entrée 70. Le conduit de sortie 72 défini par l'autre des demi-coques est dans l'autre extrémité de la traverse.

Des bouchons 102, avantageusement vissés dans les deux demi-coques 58A, 58B, ferment les conduits situés en vis-à-vis du conduit d'entrée 70 et du conduit de sortie 72.

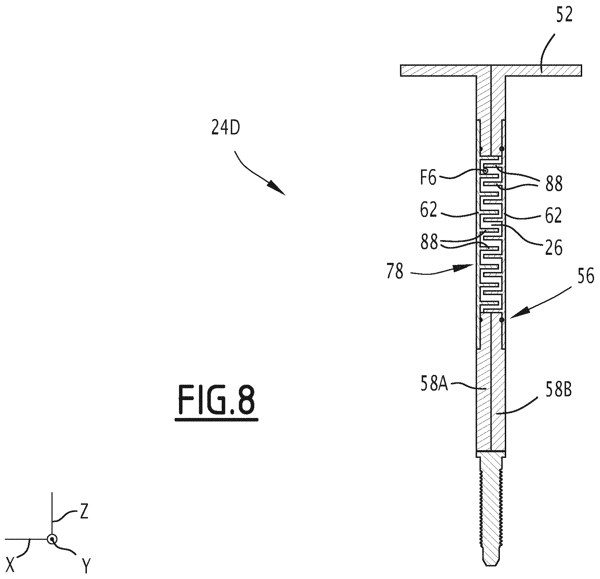

Comme visible sur les figures 6 et 8, les plaques latérales 62 ne comprennent pas de bord latéral adapté pour coopérer avec les bords complémentaires 84 délimitant les ouvertures 60. Les plaques latérales 62 sont simplement plaquées sur chacune des deux demi-coques 58A, 58B.

La face externe 78 de chacune des deux plaques latérales 62 est avantageusement en vis-à-vis de toutes les cellules électrochimiques 18 d'au moins un des modules 16.

Les ailettes 88 forment des protubérances longitudinales 86, les ailettes 88 de l'une de deux plaques latérales 62 s'enchevêtrant longitudinalement (figure 8) avec les ailettes de l'autre des deux plaques latérales, et alternant avec les ailettes de l'autre des deux plaques latérales dans la direction Z.

### Fonctionnement

Le fonctionnement de la batterie 10 découle de sa structure et va maintenant être brièvement décrit.

Comme visible sur la figure 2, le fluide réfrigérant 28 entre dans le système 20 par l'entrée 34, suit le parcours (flèches F1 à F13), et sort par la sortie 36. Dans l'exemple, le fluide réfrigérant 28 passe dans toutes les traverses 24A, ...24F successivement selon la direction longitudinale X. Les connecteurs 30 conduisent le fluide réfrigérant 28 d'une traverse à la suivante.

La chaleur dégagée dans les modules 16 se communique aux plaques latérales 62 de chacune des traverses 24A, ...24F, puis passe dans le fluide réfrigérant 28 circulant dans le conduit interne 26 de chacune des traverses 24A, ...24F.

Dans les traverses 24B, 24E à double circulation, le fluide réfrigérant 28 emprunte d'abord la première portion 26A du conduit interne 26, en passant le long des plaques latérales 62 d'une des deux demi-coques 58A, 58B. Puis le fluide réfrigérant 28 traverse la plaque centrale 64 via l'ouverture 76 et circule dans la deuxième portion 26B du conduit interne 26, en passant le long des plaques latérales 62 de l'autre des deux demi-coques 58A, 58B.

Dans les traverses 24A, 24C, 24D, 24F à simple circulation, le fluide réfrigérant 28 emprunte le conduit interne 26 dans un seul sens. Le fluide réfrigérant 28 passe simultanément le long des deux plaques latérales 62.

### Avantages

Grâce aux caractéristiques décrites ci-dessus, l'évacuation de la chaleur générée par les modules 16 est très efficaces. En effet, les traverses 24A, ...24F agissent comme des absorbeurs de chaleur répartis à l'intérieur de la batterie 10 au plus près des modules 16. Ainsi, le risque d'une élévation trop importante de la chaleur est réduit et la batterie 10 présente un risque de dysfonctionnement thermique réduit.

Le système 20 est avantageusement réversible. Il permet si on le souhaite de chauffer les modules 16, en faisant circuler un fluide chaud à la place du fluide réfrigérant, le fluide chaud pouvant être de même nature que le fluide réfrigérant.

Le système 20 permet en outre de renforcer la résistance mécanique de la batterie 10, notamment dans la direction transversale Y. Les traverses 24A, ...24F contribuent avantageusement au maintien des modules 16 dans le boîtier 12 dans la direction Z.

Avantageusement, le système 20 peut fonctionner en complément en en substitution d'une plaque de refroidissement classique.

Du fait des connecteurs 30, il est possible de remplacer une partie du système 20 sans le purger complètement.

## Revendications

1. Batterie (10) pour véhicule électrique ou hybride, comprenant un boîtier (12) définissant un logement (14) s'étendant dans une direction longitudinale (X) et dans une direction transversale (Y) perpendiculaire à la direction longitudinale (X), une pluralité de modules (16) comportant plusieurs cellules électrochimiques (18) susceptibles en fonctionnement de dégager de la chaleur, et un système (20) de refroidissement et de renfort de la batterie (10), le système (20) comprenant :
- une pluralité de traverses (24A, ...24F) s'étendant transversalement dans le logement (14), les traverses (24A, ...24F) définissant respectivement dans la direction transversale (Y) des conduits internes (26) transversaux destinés à recevoir un fluide réfrigérant (28), chacun des modules (16) s'étendant longitudinalement entre deux des traverses (24A, ...24F) et étant en contact thermique avec au moins une desdites deux traverses (24A, ...24F), et
- une pluralité de connecteurs (30) adaptés pour relier fluidiquement le conduit interne (26) d'une des traverses (24A, ...24F) au conduit interne (26) d'une autre des traverses (24A, ...24F),
les connecteurs (30) et les traverses (24A, ...24F) formant un ou plusieurs parcours (F1... F13) adapté(s) pour permettre au fluide réfrigérant (28) de passer dans les conduits internes (26), la chaleur dégagée étant destinée à passer dans les traverses (24A, ...24F) par transfert thermique, puis dans le fluide réfrigérant (28) pour être évacuée,
**caractérisée en ce que** chacune des traverses (24A, ...24F) comprend :
- deux demi-coques (58A, 58B) s'étendant transversalement et se faisant face dans la direction longitudinale (X), chacune des deux demi-coques (58A, 58B) définissant au moins une ouverture (60), et
- au moins deux plaques latérales (62) obstruant respectivement ladite ouverture (60) de chacune des deux demi-coques (58A, 58B),
les deux demi-coques (58A, 58B) et les deux plaques latérales (62) définissant au moins partiellement le conduit interne (26), chacun des modules (16) étant en contact thermique avec une face externe (78) d'au moins l'une des deux plaques latérales (62) d'au moins deux des traverses (24A, ...24F),
et **en ce que** chacune des deux plaques latérales (62) possède une face interne (80) opposée à la face externe (78) dans la direction longitudinale (X), la face interne (80) délimitant en partie le conduit interne (26) d'une des traverses (24A, ... 24F), la face interne (80) définissant des protubérances (86) destinées à favoriser un échange thermique entre le fluide réfrigérant (28) et chacune des deux plaques latérales (62).

2. Batterie (10) selon la revendication 1, dans laquelle les connecteurs (30) et les traverses (24A, ...24F) forment un seul parcours (F1... F13) pour le fluide réfrigérant (28), le parcours (F1... F13) passant dans les traverses (24A, ...24F) successivement dans la direction longitudinale (X).

3. Batterie (10) selon la revendication 1 ou 2, dans laquelle les connecteurs (30) sont situés transversalement :
- tous d'un même côté des modules (16), ou
- de part et d'autre des modules (16),
chacun des conduits internes (26) reliant fluidiquement entre elles deux extrémités (38, 40) d'une des traverses (24A, ...24F), les deux extrémités (38, 40) étant opposées transversalement l'une à l'autre.

4. Batterie (10) selon l'une quelconque des revendications 1 à 3, dans laquelle les cellules électrochimiques (18) de chacun des modules (16) sont successives dans la direction transversale (Y).

5. Batterie (10) selon l'une quelconque des revendications 1 à 4, dans laquelle chacune des traverses (24A, ...24F) a, en section selon un plan (P) perpendiculaire à la direction transversale (Y), une forme en « T » ou définissant un « T », la barre du « T » définissant une première partie (52) de chacune des traverses (24A, ...24F) parallèle à un fond (54) du boîtier (12) et adaptée pour retenir les modules (16) vers fond (54), et le reste du « T » définissant une deuxième partie (56) de chacune des traverses (24A, ...24F) dans laquelle s'étend un des conduits internes (26).

6. Batterie (10) selon l'une quelconque des revendications 1 à 5, dans laquelle, chacune des traverses (24A, ...24F) ayant deux extrémités (38, 40) opposées transversalement l'une à l'autre :
- dans au moins certaines des traverses (24A, 24C, 24D, 24F), le conduit interne (26) est adapté pour permettre au fluide réfrigérant (28) d'entrer par l'une des deux extrémités (38, 40) et de sortir par l'autre des deux extrémités (38, 40), et/ou
- dans au moins certaines des traverses (24B, 24E), le conduit interne (26) est adapté pour permettre au fluide réfrigérant (28) d'entrer par l'une des deux extrémités (38, 40), d'aller jusqu'à l'autre des deux extrémités (38, 40) via une première portion (26A) du conduit interne (26), de revenir vers ladite une des deux extrémités (38, 40) via une deuxième portion (26B) du conduit interne (26), et de sortir par ladite une des deux extrémités (38, 40).

7. Batterie (10) selon l'une quelconque des revendications 1 à 6, dans laquelle les deux demi-coques (58A, 58B) sont structurellement identiques l'une à l'autre.

8. Batterie (10) selon l'une quelconque des revendications 1 à 7, dans laquelle au moins une des traverses (24B, 24E) comprend une plaque centrale (64) perpendiculaire à la direction longitudinale (X), les deux demi-coques (58A, 58B) étant fixées sur la plaque centrale (64), le conduit interne (26) comprenant une première portion (26A) située contre un côté de la plaque centrale (64) dans la direction longitudinale (X), et une deuxième portion (26B) située de l'autre côté de la plaque centrale (64), le fluide réfrigérant (28) étant destiné à circuler dans la première portion (26A) dans un sens selon la direction transversale (Y) et à circuler dans la deuxième portion (26B) dans l'autre sens, la plaque centrale (64) définissant au moins un passage (76) pour permettre au fluide réfrigérant (28) de passer de la première portion (26A) à la deuxième portion (26B).

9. Batterie (10) selon la revendication 8, dans laquelle :
- dans ladite au moins une des traverses (24B, 24E), chacune des deux demi-coques (58A, 58B) définit une pluralité d'ouvertures (60) espacées dans la direction transversale (Y), et
- ladite au moins une des traverses (24B, 24E) comprend une pluralité de plaques latérales (62) obstruant respectivement la pluralité d'ouvertures (60) de chacune des deux demi-coques (58A, 58B).

10. Batterie (10) selon la revendication 9, dans laquelle :
- chacune des plaques latérales (62) comprend une face interne (78) définissant des ailettes (88) formant des passages (90) orientés transversalement pour le fluide réfrigérant (28), et
- ladite au moins une des traverses (24B, 24E) comprend une pluralité d'éléments distributeurs (66) intercalés longitudinalement entre chacune des plaques latérales (62) et la plaque centrale (64), les éléments distributeurs (66) étant adaptés pour forcer le fluide réfrigérant (28) arrivant transversalement en amont d'une des plaques latérales (62) à entrer dans les passages (90) par un premier côté (92) des ailettes (88) dans la direction transversale (Y), à parcourir les passages (90), puis à sortir des passages (90) par un deuxième côté (94) des ailettes (88) transversalement opposé au premier côté (92).

11. Batterie (10) selon l'une quelconque des revendications 1 à 7, dans laquelle, dans au moins une des traverses (24A, 24C, 24D, 24F) :
- les deux demi-coques (58A, 58B) sont fixées l'une sur l'autre, le fluide réfrigérant (28) étant destiné à circuler dans le conduit interne (26) dans un seul sens selon la direction transversale (Y),
- chacune des deux demi-coques (58A, 58B) définit une ouverture (60) oblongue s'étendent transversalement sur au moins 80% de la longueur de ladite au moins une des traverses (24A, 24C, 24D, 24F) dans la direction transversale (Y), et
- les deux plaques latérales (62) obstruent respectivement l'ouverture (60) de chacune des deux demi-coques (58A, 58B).

12. Batterie (10) selon la revendication 11, dans laquelle, dans ladite au moins une des traverses (24A, 24C, 24D, 24F), chacune des deux plaques latérales (62) comprend une face interne (80) définissant des ailettes (88) délimitant des passages (90) orientés transversalement pour le fluide réfrigérant (28).

13. Batterie (10) selon la revendication 12, dans laquelle les ailettes (88) forment des protubérances longitudinales (88), les ailettes (88) de l'une de deux plaques latérales (62) s'enchevêtrant longitudinalement avec les ailettes (88) de l'autre des deux plaques latérales (62), et alternant avec les ailettes (88) de l'autre des deux plaques latérales (62) dans une direction (Z) perpendiculaire à la direction longitudinale (X) et à la direction transversale (Y).

## Patentansprüche

1. Batterie (10) für ein Elektro- oder Hybridfahrzeug, umfassend: ein Gehäuse (12), das einen Aufnahmeraum (14) definiert, der sich in einer Längsrichtung (X) und in einer Querrichtung (Y) senkrecht zur Längsrichtung (X) erstreckt, eine Vielzahl von Modulen (16), die mehrere elektrochemische Zellen (18) aufweisen, die im Betrieb Wärme abgeben können, und ein System (20) zur Kühlung und Verstärkung der Batterie (10), wobei das System (20) Folgendes umfasst:
- eine Vielzahl von Querträgern (24A, ...24F), die sich quer im Aufnahmeraum (14) erstrecken, wobei die Querträger (24A, ...24F) jeweils in der Querrichtung (Y) quer verlaufende Innenkanäle (26) definieren, die dazu bestimmt sind, ein Kühlfluid (28) aufzunehmen, wobei sich jedes der Module (16) in Längsrichtung zwischen zwei der Querträger (24A, ...24F) erstreckt und mit mindestens einem der genannten zwei Querträger (24A, ...24F) in thermischem Kontakt steht, und
- eine Vielzahl von Verbindern (30), die dazu ausgelegt sind, den Innenkanal (26) eines der Querträger (24A, ...24F) fluidisch mit dem Innenkanal (26) eines anderen der Querträger (24A, ...24F) zu verbinden,
wobei die Verbinder (30) und die Querträger (24A, ...24F) einen oder mehrere Strömungswege (F1...F13) bilden, der bzw. die dazu ausgelegt ist bzw. sind, dem Kühlfluid (28) zu ermöglichen, durch die Innenkanäle (26) zu strömen, wobei die abgegebene Wärme dazu bestimmt ist, durch Wärmeübertragung in die Querträger (24A, ...24F) und anschließend in das Kühlfluid (28) überzugehen, um abgeführt zu werden,
**dadurch gekennzeichnet, dass** jeder der Querträger (24A, ...24F) Folgendes umfasst:
- zwei Halbschalen (58A, 58B), die sich quer erstrecken und einander in der Längsrichtung (X) gegenüberliegen, wobei jede der zwei Halbschalen (58A, 58B) mindestens eine Öffnung (60) definiert, und
- mindestens zwei Seitenplatten (62), die jeweils die genannte Öffnung (60) jeder der zwei Halbschalen (58A, 58B) verschließen,
wobei die zwei Halbschalen (58A, 58B) und die zwei Seitenplatten (62) den Innenkanal (26) zumindest teilweise definieren, wobei jedes der Module (16) mit einer Außenfläche (78) mindestens einer der zwei Seitenplatten (62) mindestens zweier der Querträger (24A, ...24F) in thermischem Kontakt steht,
und dass jede der zwei Seitenplatten (62) eine Innenfläche (80) aufweist, die der Außenfläche (78) in der Längsrichtung (X) gegenüberliegt, wobei die Innenfläche (80) den Innenkanal (26) eines der Querträger (24A, ...24F) teilweise begrenzt, wobei die Innenfläche (80) Vorsprünge (86) definiert, die dazu bestimmt sind, einen Wärmeaustausch zwischen dem Kühlfluid (28) und jeder der zwei Seitenplatten (62) zu begünstigen.

2. Batterie (10) nach Anspruch 1, bei der die Verbinder (30) und die Querträger (24A, ...24F) einen einzigen Strömungsweg (F1... F13) für das Kühlfluid (28) bilden, wobei der Strömungsweg (F1... F13) die Querträger (24A, ...24F) nacheinander in der Längsrichtung (X) durchläuft.

3. Batterie (10) nach Anspruch 1 oder 2, bei der die Verbinder (30) in Querrichtung angeordnet sind:
- alle auf derselben Seite der Module (16), oder
- auf beiden Seiten der Module (16),
wobei jeder der Innenkanäle (26) zwei Enden (38, 40) eines der Querträger (24A, ...24F) fluidisch miteinander verbindet, wobei die zwei Enden (38, 40) einander in Querrichtung gegenüberliegen.

4. Batterie (10) nach einem der Ansprüche 1 bis 3, bei der die elektrochemischen Zellen (18) jedes der Module (16) in der Querrichtung (Y) aufeinanderfolgen.

5. Batterie (10) nach einem der Ansprüche 1 bis 4, bei der
jeder der Querträger (24A, ...24F) im Schnitt entlang einer Ebene (P) senkrecht zur Querrichtung (Y) eine "T"-Form aufweist oder ein "T" definiert, wobei der Balken des "T" einen ersten Teil (52) jedes der Querträger (24A, ...24F) definiert, der parallel zu einem Boden (54) des Gehäuses (12) ist und dazu ausgelegt ist, die Module (16) zum Boden (54) hin zurückzuhalten, und der Rest des "T" einen zweiten Teil (56) jedes der Querträger (24A, ... 24F) definiert, in dem sich einer der Innenkanäle (26) erstreckt.

6. Batterie (10) nach einem der Ansprüche 1 bis 5, bei der jeder der Querträger (24A, ...24F) zwei Enden (38, 40) aufweist, die einander in Querrichtung gegenüberliegen:
- in zumindest einigen der Querträger (24A, 24C, 24D, 24F) ist der Innenkanal
(26) dazu ausgelegt, dem Kühlfluid (28) zu ermöglichen, durch eines der zwei Enden (38, 40) einzutreten und durch das andere der zwei Enden (38, 40) auszutreten, und/oder
- in zumindest einigen der Querträger (24B, 24E) ist der Innenkanal (26) dazu ausgelegt, dem Kühlfluid (28) zu ermöglichen, durch eines der zwei Enden (38, 40) einzutreten, über einen ersten Abschnitt (26A) des Innenkanals (26) bis zum anderen der zwei Enden (38, 40) zu gelangen, über einen zweiten Abschnitt (26B) des Innenkanals (26) zu dem genannten einen der zwei Enden (38, 40) zurückzukehren und durch das genannte eine der zwei Enden (38, 40) auszutreten.

7. Batterie (10) nach einem der Ansprüche 1 bis 6, bei der die zwei Halbschalen (58A, 58B) strukturell miteinander identisch sind.

8. Batterie (10) nach einem der Ansprüche 1 bis 7, bei der mindestens einer der Querträger (24B, 24E) eine Mittelplatte (64) umfasst, die senkrecht zur Längsrichtung (X) ist, wobei die zwei Halbschalen (58A, 58B) an der Mittelplatte (64) befestigt sind, wobei der Innenkanal (26) einen ersten Abschnitt (26A), der an einer Seite der Mittelplatte (64) in der Längsrichtung (X) angeordnet ist, und einen zweiten Abschnitt (26B), der auf der anderen Seite der Mittelplatte (64) angeordnet ist, umfasst, wobei das Kühlfluid (28) dazu bestimmt ist, im ersten Abschnitt (26A) in einer Richtung entlang der Querrichtung (Y) und im zweiten Abschnitt (26B) in der anderen Richtung zu strömen, wobei die Mittelplatte (64) mindestens einen Durchlass (76) definiert, um dem Kühlfluid (28) zu ermöglichen, vom ersten Abschnitt (26A) zum zweiten Abschnitt (26B) überzugehen.

9. Batterie (10) nach Anspruch 8, bei der:
- in dem genannten mindestens einen der Querträger (24B, 24E) jede der zwei Halbschalen (58A, 58B) eine Vielzahl von Öffnungen (60) definiert, die in der Querrichtung (Y) voneinander beabstandet sind, und
- der genannte mindestens eine der Querträger (24B, 24E) eine Vielzahl von Seitenplatten (62) umfasst, die jeweils die Vielzahl von Öffnungen (60) jeder der zwei Halbschalen (58A, 58B) verschließen.

10. Batterie (10) nach Anspruch 9, bei der:
- jede der Seitenplatten (62) eine Innenfläche (78) umfasst, die Rippen (88) definiert, welche quer ausgerichtete Durchgänge (90) für das Kühlfluid (28) bilden, und
- der genannte mindestens eine der Querträger (24B, 24E) eine Vielzahl von Verteilerelementen (66) umfasst, die in Längsrichtung zwischen jeder der Seitenplatten (62) und der Mittelplatte (64) angeordnet sind, wobei die Verteilerelemente (66) dazu ausgelegt sind, das in Querrichtung stromaufwärts einer der Seitenplatten (62) ankommende Kühlfluid (28) dazu zu zwingen, von einer ersten Seite (92) der Rippen (88) in der Querrichtung (Y) in die Durchgänge (90) einzutreten, die Durchgänge (90) zu durchlaufen und anschließend von einer zweiten Seite (94) der Rippen (88), die der ersten Seite (92) in Querrichtung gegenüberliegt, aus den Durchgängen (90) auszutreten.

11. Batterie (10) nach einem der Ansprüche 1 bis 7, bei der in mindestens einem der Querträger (24A, 24C, 24D, 24F):
- die zwei Halbschalen (58A, 58B) aneinander befestigt sind, wobei das Kühlfluid (28) dazu bestimmt ist, im Innenkanal (26) in einer einzigen Richtung entlang der Querrichtung (Y) zu strömen,
- jede der zwei Halbschalen (58A, 58B) eine längliche Öffnung (60) definiert, die sich quer über mindestens 80% der Länge des genannten mindestens einen der Querträger (24A, 24C, 24D, 24F) in der Querrichtung (Y) erstreckt, und
- die zwei Seitenplatten (62) jeweils die Öffnung (60) jeder der zwei Halbschalen (58A, 58B) verschließen.

12. Batterie (10) nach Anspruch 11, bei der in dem genannten mindestens einen der Querträger (24A, 24C, 24D, 24F) jede der zwei Seitenplatten (62) eine Innenfläche (80) umfasst, die Rippen (88) definiert, welche quer ausgerichtete Durchgänge (90) für das Kühlfluid (28) begrenzen.

13. Batterie (10) nach Anspruch 12, bei der die Rippen (88) längsgerichtete Vorsprünge (88) bilden, wobei die Rippen (88) einer der zwei Seitenplatten (62) in Längsrichtung mit den Rippen (88) der anderen der zwei Seitenplatten (62) ineinandergreifen und sich mit den Rippen (88) der anderen der zwei Seitenplatten (62) in einer Richtung (Z) abwechseln, die senkrecht zur Längsrichtung (X) und zur Querrichtung (Y) ist.

## Claims

1. Battery (10) for an electric or hybrid vehicle, comprising a housing (12) defining a compartment (14) extending in a longitudinal direction (X) and in a transverse direction (Y) perpendicular to the longitudinal direction (X), a plurality of modules (16) comprising several electrochemical cells (18) capable of releasing heat during operation, and a system (20) for cooling and reinforcing the battery (10), the system (20) comprising:
- a plurality of crossmembers (24A,...24F) extending transversely in the compartment (14), the crossmembers (24A,...24F) respectively defining, in the transverse direction (Y), transverse internal ducts (26) intended to receive a coolant fluid (28), each of the modules (16) extending longitudinally between two of the crossmembers (24A,...24F) and being in thermal contact with at least one of said two crossmembers (24A,...24F), and
- a plurality of connectors (30) adapted to fluidically connect the internal duct (26) of one of the crossmembers (24A,...24F) to the internal duct (26) of another of the crossmembers (24A,...24F),
the connectors (30) and the crossmembers (24A,...24F) forming one or more paths (F1...F13) adapted to allow the coolant fluid (28) to pass through the internal ducts (26), the heat released being intended to pass into the crossmembers (24A,...24F) by heat transfer, then into the coolant fluid (28) to be removed,
**characterized in that** each of the crossmembers (24A,...24F) comprises:
- two half-shells (58A, 58B) extending transversely and facing each other in the longitudinal direction (X), each of the two half-shells (58A, 58B) defining at least one opening (60), and
- at least two side plates (62) respectively closing off said opening (60) of each of the two half-shells (58A, 58B),
the two half-shells (58A, 58B) and the two side plates (62) at least partially defining the internal duct (26), each of the modules (16) being in thermal contact with an external face (78) of at least one of the two side plates (62) of at least two of the crossmembers (24A,...24F),
and **in that** each of the two side plates (62) has an internal face (80) opposite the external face (78) in the longitudinal direction (X), the internal face (80) partially delimiting the internal duct (26) of one of the crossmembers (24A,...24F), the internal face (80) defining protrusions (86) intended to promote heat exchange between the coolant fluid (28) and each of the two side plates (62).

2. Battery (10) according to claim 1, wherein the connectors (30) and the crossmembers (24A,...24F) form a single path (F1... F13) for the coolant fluid (28), the path (F1... F13) passing through the crossmembers (24A,...24F) successively in the longitudinal direction (X).

3. Battery (10) according to claim 1 or 2, wherein the connectors (30) are located transversely:
- all on the same side of the modules (16), or
- on either side of the modules (16),
each of the internal ducts (26) fluidically connecting together two ends (38, 40) of one of the crossmembers (24A,...24F), the two ends (38, 40) being transversely opposite each other.

4. Battery (10) according to any one of claims 1 to 3, wherein the electrochemical cells (18) of each of the modules (16) are successive in the transverse direction (Y).

5. Battery (10) according to any one of claims 1 to 4, wherein each of the crossmembers (24A,...24F) has, in a section along a plane (P) perpendicular to the transverse direction (Y), a shape of a "T" or defines a "T", the bar of the "T" defining a first part (52) of each of the crossmembers (24A,...24F) parallel to a bottom (54) of the housing (12) and adapted to retain the modules (16) toward the bottom (54), and the rest of the "T" defining a second part (56) of each of the crossmembers (24A,... 24F) in which one of the internal ducts (26) extends.

6. Battery (10) according to any one of claims 1 to 5, wherein, each of the crossmembers (24A,...24F) having two ends (38, 40) transversely opposite each other:
- in at least some of the crossmembers (24A, 24C, 24D, 24F), the internal duct
(26) is adapted to allow the coolant fluid (28) to enter through one of the two ends (38, 40) and exit through the other of the two ends (38, 40), and/or
- in at least some of the crossmembers (24B, 24E), the internal duct (26) is adapted to allow the coolant fluid (28) to enter through one of the two ends (38, 40), to go as far as the other of the two ends (38, 40) via a first portion (26A) of the internal duct (26), to return toward said one of the two ends (38, 40) via a second portion (26B) of the internal duct (26), and to exit through said one of the two ends (38, 40).

7. Battery (10) according to any one of claims 1 to 6, wherein the two half-shells (58A, 58B) are structurally identical to each other.

8. Battery (10) according to any one of claims 1 to 7, wherein at least one of the crossmembers (24B, 24E) comprises a central plate (64) perpendicular to the longitudinal direction (X), the two half-shells (58A, 58B) being fixed to the central plate (64), the internal duct (26) comprising a first portion (26A) located against one side of the central plate (64) in the longitudinal direction (X), and a second portion (26B) located on the other side of the central plate (64), the coolant fluid (28) being intended to circulate in the first portion (26A) in one sense along the transverse direction (Y) and to circulate in the second portion (26B) in the other sense, the central plate (64) defining at least one passage (76) to allow the coolant fluid (28) to pass from the first portion (26A) to the second portion (26B).

9. Battery (10) according to claim 8, wherein:
- in said at least one of the crossmembers (24B, 24E), each of the two half-shells (58A, 58B) defines a plurality of openings (60) spaced apart in the transverse direction (Y), and
- said at least one of the crossmembers (24B, 24E) comprises a plurality of side plates (62) respectively closing off the plurality of openings (60) of each of the two half-shells (58A, 58B).

10. Battery (10) according to claim 9, wherein:
- each of the side plates (62) comprises an internal face (78) defining fins (88) forming transversely oriented passages (90) for the coolant fluid (28), and
- said at least one of the crossmembers (24B, 24E) comprises a plurality of distributor elements (66) interposed longitudinally between each of the side plates (62) and the central plate (64), the distributor elements (66) being adapted to force the coolant fluid (28) arriving transversely upstream of one of the side plates (62) to enter the passages (90) through a first side (92) of the fins (88) in the transverse direction (Y), to travel through the passages (90), then to exit the passages (90) through a second side (94) of the fins (88) transversely opposite the first side (92).

11. Battery (10) according to any one of claims 1 to 7, wherein, in at least one of the crossmembers (24A, 24C, 24D, 24F):
- the two half-shells (58A, 58B) are fixed to each other, the coolant fluid (28) being intended to circulate in the internal duct (26) in only one sense along the transverse direction (Y),
- each of the two half-shells (58A, 58B) defines an oblong opening (60) extending transversely over at least 80% of the length of said at least one of the crossmembers (24A, 24C, 24D, 24F) in the transverse direction (Y), and
- the two side plates (62) respectively obstruct the opening (60) of each of the two half-shells (58A, 58B).

12. Battery (10) according to claim 11, in which, in said at least one of the crossmembers (24A, 24C, 24D, 24F), each of the two side plates (62) comprises an inner face (80) defining fins (88) delimiting transversely oriented passages (90) for the coolant fluid (28).

13. Battery (10) according to claim 12, in which the fins (88) form longitudinal protrusions (88), the fins (88) of one of the two side plates (62) intermeshing longitudinally with the fins (88) of the other of the two side plates (62), and alternating with the fins (88) of the other of the two side plates (62) in a direction (Z) perpendicular to the longitudinal direction (X) and to the transverse direction (Y).
